# EUROPEAN PATENT APPLICATION

(11) **EP 4 818 547 A1**
(43) Date of publication of application: **07.10.2026**
(21) Application number: 24897004.8
(22) Date of filing: 22.08.2024
(51) Int. Cl.: F16G 13/20, E05F 15/619, F16H 19/02

(54) **CHAIN DRIVE DEVICE AND DOOR OPENING/CLOSING MECHANISM**

(30) Priority: 29.11.2023 JP 2023201751; 08.02.2024 JP 2024018121
(71) Applicant: Tsubakimoto Chain Co., Osaka 530-0005 (JP)
(72) Inventor: SHIKI, Tamaki, Osaka-shi, Osaka 530-0005 (JP); TAMAI, Masahiro, Osaka-shi, Osaka 530-0005 (JP); SHOJI, Ryuta, Osaka-shi, Osaka 530-0005 (JP)
(74) Representative: dompatent
(86) International application number: PCT/JP2024/029888
(87) International publication number: WO 2025/115312

(57) **Abstract**

[Problem] To provide a chain drive device that has high versatility and is capable of easily and freely changing the feeding-out direction without changing the overall posture or adding another mechanism, and a door opening and closing mechanism.

[Solution] A chain drive device includes: a chain member (110) composed of a pair of chains that are driven to move back and forth and engage with each other to be integrated; a chain guide mechanism that guides the chain member (110) from a chain accommodation unit (131) into a rigid state; and a drive mechanism that drives the chain member (110) back and forth, wherein the chain guide mechanism includes a fixed guide unit (120) continuous with the first chain accommodation unit (131), and a swing guide unit (140) arranged to be swingable relative to the fixed guide unit (120).

## Description

### Technical Field

The present invention relates to a chain drive device including a chain member driven to move back and forth, a chain accommodation unit that accommodates the chain member, a chain guide mechanism that guides the chain member from the chain accommodation unit into a rigid state, and a drive mechanism that drives the chain member back and forth, and to a door opening and closing mechanism.

### Background Art

As a drive device that generates a pressing force, a known chain drive device includes a chain member driven to move back and forth, a chain accommodation unit that accommodates the chain member, a chain guide mechanism that guides the chain member from the chain accommodation unit into a rigid state, and a drive mechanism that drives the chain back and forth.

Examples thereof include a drive device as disclosed in Patent Literature 1 in which a pair of engagement chains (chain members) engage with each other to be integrated with movement in the forward direction, and disengage from each other to be separated with movement in the backward direction, and a drive device as disclosed in Patent Literature 2 in which a chain that is bendable in one direction but unbendable in the opposite direction is fed out linearly.

### Citation List

### Patent Literature

Patent Literature 1: Japanese Patent No. 6673011
Patent Literature 2: Japanese Patent Application Laid-open No. 2020-2988
Patent Literature 3: Japanese Patent No. 7253697

### Summary of Invention

### Technical Problem

The known chain drive devices described above can generate a pressing force in the feeding-out direction by the chain member fed out linearly, but require an accommodation unit that accommodates the chain member to be fed out. For example, when used for opening and closing a door member including a hinge shaft and the pressing direction changes, it becomes necessary to change the overall posture of the chain drive device including the accommodation unit that accommodates the chain member, or to add another mechanism such as a link mechanism to change the feeding-out direction, resulting in a complicated structure.

Furthermore, a device as disclosed in Patent Literature 3 is also known in which a chain fed out specifically for opening and closing a door member including a hinge shaft is made rigid in a curved shape. However, since the feeding-out direction does not coincide with the pressing direction and the angle therebetween increases as the chain is fed out, it is necessary to provide extremely high bending rigidity when the chain is made rigid. In addition, the feeding-out path of the chain is fixed at a constant radius of curvature, resulting in poor versatility.

The present invention addresses the problems described above and aims to provide a chain drive device that has high versatility and is capable of easily and freely changing the feeding-out direction without changing the overall posture or adding another mechanism, and a door opening and closing mechanism using the chain drive device.

### Solution to Problem

In order to address the problems described above, the present invention provides a chain drive device including: a chain member driven to move back and forth; a chain accommodation unit that accommodates the chain member; a chain guide mechanism that guides the chain member from the chain accommodation unit into a rigid state; and a drive mechanism that drives the chain member back and forth, wherein the chain guide mechanism includes a fixed guide unit continuous with the chain accommodation unit, and a swing guide unit arranged to be swingable relative to the fixed guide unit.

Furthermore, in order to address the problems described above, the present invention provides a door opening and closing mechanism for opening and closing a door member rotatably connected to a body unit via a hinge shaft by a chain drive device, wherein the chain drive device includes a chain member driven to move back and forth, a chain accommodation unit that accommodates the chain member, a chain guide mechanism that guides the chain member from the chain accommodation unit into a rigid state, and a drive mechanism that drives the chain member back and forth, the chain guide mechanism includes a fixed guide unit continuous with the chain accommodation unit, and a swing guide unit arranged to be swingable relative to the fixed guide unit, the fixed guide unit is connected to the body unit, and a distal end on a protruding side of the chain member is connected to the door member.

### Advantageous Effects of Invention

According to the invention of claim 1, since the chain guide mechanism includes the fixed guide unit continuous with the chain accommodation unit and the swing guide unit arranged to be swingable relative to the fixed guide unit, it is possible to easily change the feeding-out direction by swinging the swing guide unit without changing the overall posture or adding another mechanism.

According to the configuration of claim 2, since the swing center of the swing guide unit is aligned with the rotation center of the sprocket, it is not necessary to swing the drive mechanism when the swing guide unit swings, and the feeding-out direction can be changed more easily.

According to the configuration of claim 3, since the chain member includes the pair of chains that engage with each other to be integrated, the chain member fed out is made rigid regardless of the swinging direction, thereby further increasing the degree of freedom in swinging.

According to the invention of claim 4, since the swing center of the swing guide unit is aligned with the rotation center of the sprocket, it is not necessary to swing the drive mechanism when the swing guide unit swings, and the feeding-out direction can be changed more easily, thereby enabling a compact door opening and closing mechanism to be configured.

### Brief Description of Drawings

[Fig. 1] Fig. 1 is a perspective view of a chain drive device during vertical feeding according to an embodiment of the present invention.
[Fig. 2] Fig. 2 is a view illustrating a state in which a part of the components is removed from Fig. 1.
[Fig. 3] Fig. 3 is a cross-sectional view of the chain drive device during vertical feeding according to an embodiment of the present invention.
[Fig. 4] Fig. 4 is a view illustrating a state in which a chain member is removed from Fig. 3.
[Fig. 5] Fig. 5 is a perspective view of Fig. 4.
[Fig. 6] Fig. 6 is a perspective view of the chain drive device during a change in a feeding-out direction according to an embodiment of the present invention.
[Fig. 7] Fig. 7 is a view illustrating a state in which a part of the components is removed from Fig. 6.
[Fig. 8] Fig. 8 is a cross-sectional view of the chain drive device during a change in the feeding-out direction according to an embodiment of the present invention.
[Fig. 9] Fig. 9 is a view illustrating a state in which the chain member is removed from Fig. 8.
[Fig. 10] Fig. 10 is a perspective view of Fig. 9.
[Fig. 11] Fig. 11 is a view illustrating opening and closing of a door member.
[Fig. 12] Fig. 12 is an explanatory perspective view illustrating a door opening and closing mechanism according to an embodiment of the present invention.
[Fig. 13] Fig. 13 is an enlarged explanatory view illustrating a vicinity of the chain drive device in Fig. 12.

### Description of Embodiments

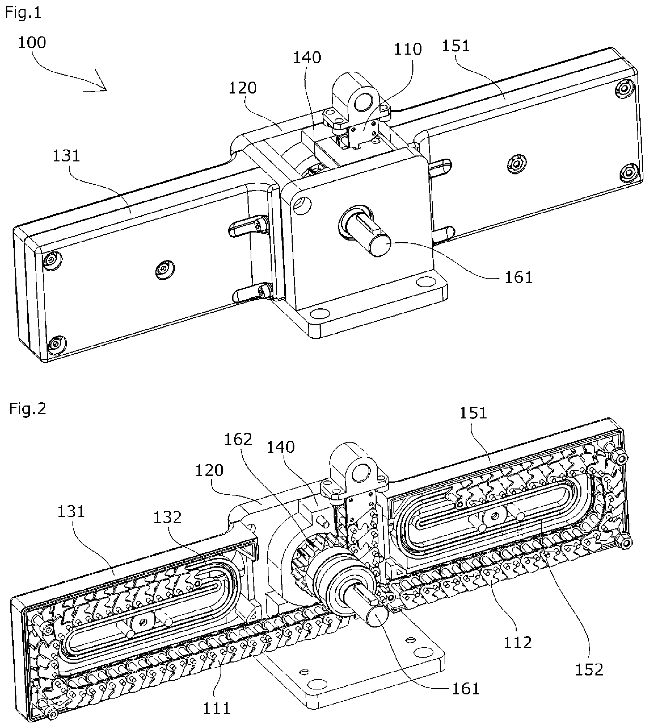

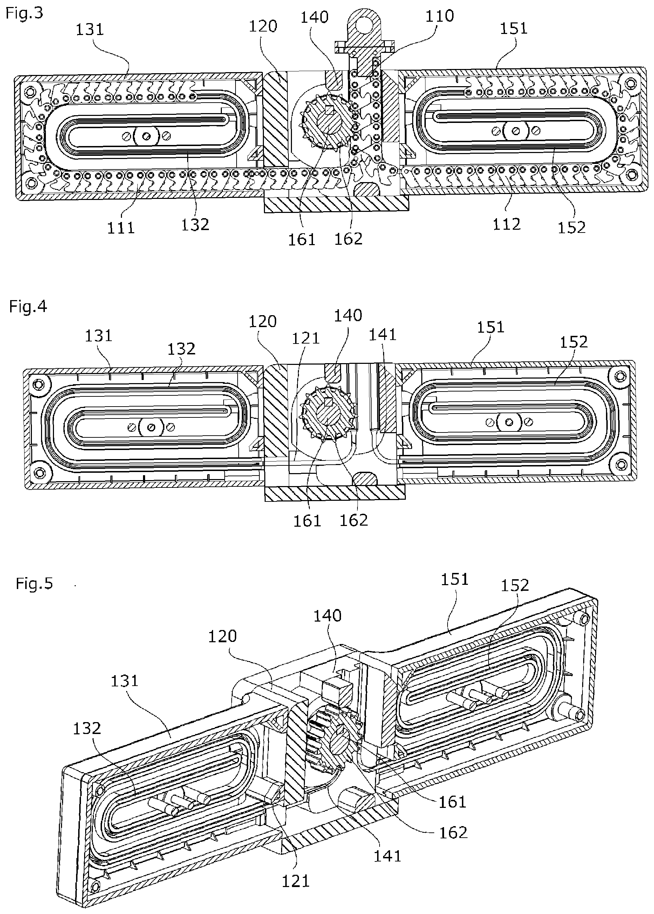

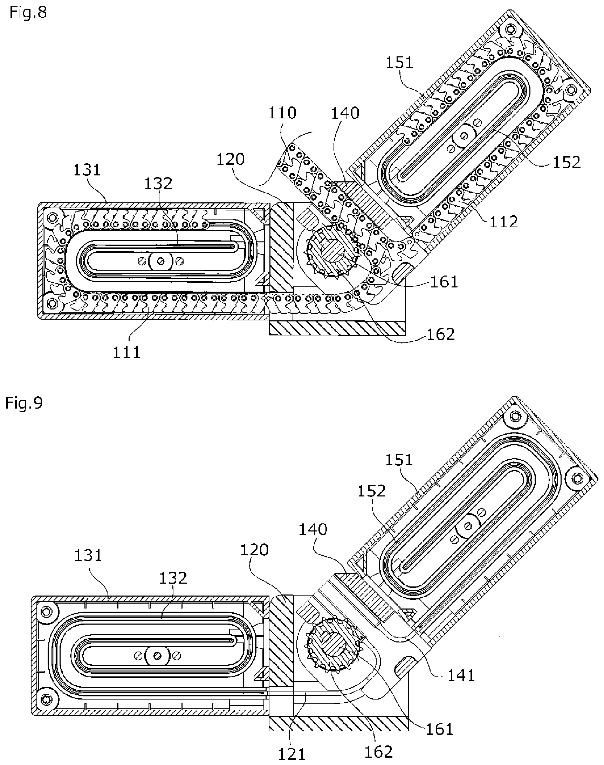

Embodiments of the present invention will be described with reference to Figs. 1 to 10. However, the present invention is not limited to these embodiments.

### Embodiments

As illustrated in Figs. 1 to 10, a chain drive device 100 according to an embodiment of the present invention includes: a chain member 110 composed of a pair of chains (a first chain 111 and a second chain 112) that are driven to move back and forth and engage with each other to be integrated; a chain accommodation unit (a first chain accommodation unit 131 and a second chain accommodation unit 151) that accommodates the chain member; a chain guide mechanism that guides the chain member 110 from the chain accommodation unit into a rigid state; and a drive mechanism that drives the chain member 110 back and forth.

The chain accommodating unit includes the first chain accommodation unit 131 that accommodates the first chain 111, which is one of the pair of chains, and the second chain accommodation unit 151 that accommodates the second chain 112, which is the other of the pair of chains.

The chain guide mechanism includes a fixed guide unit 120 continuous with the first chain accommodation unit 131, and a swing guide unit 140 arranged to be swingable relative to the fixed guide unit 120, wherein the fixed guide unit 120 is integrally formed with the first chain accommodation unit 131 that accommodates the first chain 111 in a state of being mutually fixed, and the swing guide unit 140 is integrally formed with the second chain accommodation unit 151 that accommodates the second chain 112 in a state of being mutually fixed.

The drive mechanism includes a drive shaft 161 and a sprocket 162 that rotates integrally with the drive shaft 161 and engages with the first chain 111 at a position where the chain member 110 is in a rigid state.

In the present embodiment, a swing center of the swing guide unit 140 is configured to be aligned with a rotation center of the sprocket 162.

Note that the rotation center of the sprocket and the swing center of the swing guide are not necessarily aligned with each other.

The first chain accommodation unit 131 and the second chain accommodation unit 151 are provided with a first accommodation guide groove 132 and a second accommodation guide groove 152, respectively. When the chain member 110 is drawn in, the first chain 111 and the second chain 112 are guided by the first accommodation guide groove 132 and the second accommodation guide groove 152, respectively, and are separately accommodated.

The swing guide unit 140 is provided with a swing guide groove 141 into which the first chain 111 and the second chain 112 are drawn from both sides and guided into a rigid state.

Furthermore, the fixed guide unit 120 is provided with a fixed guide groove 121 that connects the first accommodation guide groove 132 of the first chain accommodation unit 131 with the swing guide groove 141 of the swing guide unit 140.

In the present embodiment, pins of the first chain 111 and the second chain 112 are provided so as to protrude in both width directions, and the pins of the first chain 111 and the second chain 112 are configured to be guided by engaging with the first accommodation guide groove 132, the second accommodation guide groove 152, the swing guide groove 141, and the fixed guide groove 121.

The chain drive device 100 of this embodiment is configured such that, when the drive shaft 161 rotates and the second chain 112 is fed out by the sprocket 162, the first and second chains 111 and 112 are drawn out from the first and second chain accommodation units 131 and 151, respectively, guided along the swing guide groove 141, brought into an integrated rigid state, and fed upward.

Further, since the swing guide unit 140 swings about the rotational axis of the sprocket 162 that engages with the first chain 111, the feeding-out direction of the chain member 110 can be changed, and changes in the feeding-out direction of the chain member 110 can be followed.

Further, although the sprocket 162 is driven by a drive motor or a reducer connected to the drive shaft 161, the swing center of the swing guide unit 140 is aligned with the rotation center of the sprocket 162, whereby the position of the drive shaft 161 remains unchanged. Therefore, a heavy drive motor or reducer can be fixedly arranged in the same manner as the fixed guide unit 120 and the first chain accommodation unit 131.

The operation of opening and closing a driven member D including a hinge shaft H by the chain drive device 100 configured as described above will be described.

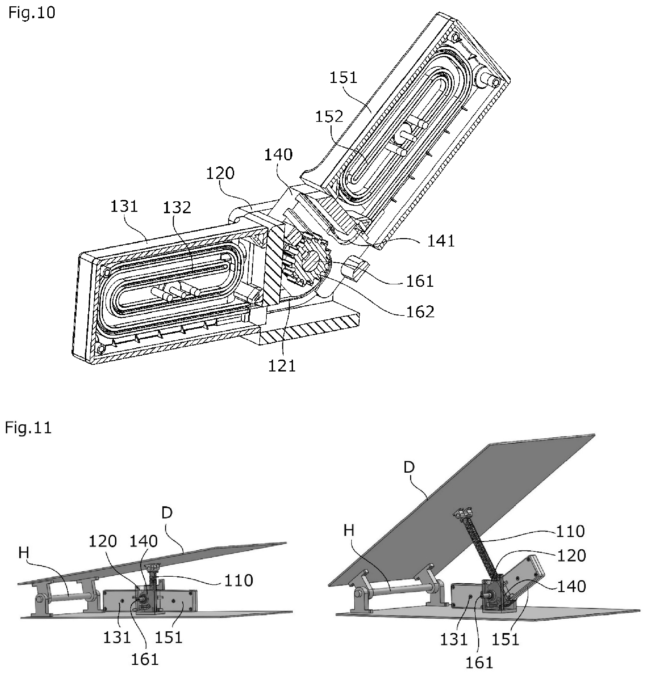

As illustrated in Fig. 11, the chain drive device 100 is fixed to a fixed member, and the driven member D is fixed to a distal end of the chain member 110 of the chain drive device 100.

The driven member D is configured to rotate about the hinge shaft H. When the driven member D swings downward, a distal end of a rigid portion of the chain member 110 of the chain drive device 100 in a state illustrated in Figs. 1 to 5 is connected to an inner side of the driven member D in the downwardly swung state.

From this state, when the drive shaft 161 rotates and the second chain 112 is fed out by the sprocket 162, the first chain 111 and the second chain 112 are drawn out from the first and second chain accommodation units 131 and 151, respectively, guided along the swing guide groove 141, brought into an integrated rigid state, and fed upward, thereby pushing up the driven member D.

Since the driven member D swings upward while rotating about the hinge shaft H, the distal end of the chain member 110 connected to the driven member D moves upward and toward the hinge shaft H, and the pressing-up direction gradually tilts.

Since the swing guide unit 140 swings about the rotational axis of the sprocket 162 that engages with the first chain 111, the feeding-out direction also tilts in conjunction with the upward swinging of the driven member D, thereby enabling a smooth operation.

Furthermore, although the sprocket 162 is driven by a drive motor or a reducer connected to the drive shaft 161, in this embodiment, the swing center of the swing guide unit 140 is aligned with the rotation center of the sprocket 162, whereby the position of the drive shaft 161 remains unchanged. Therefore, a heavy drive motor or reducer can be fixedly arranged in the same manner as the fixed guide unit 120 and the first chain accommodation unit 131.

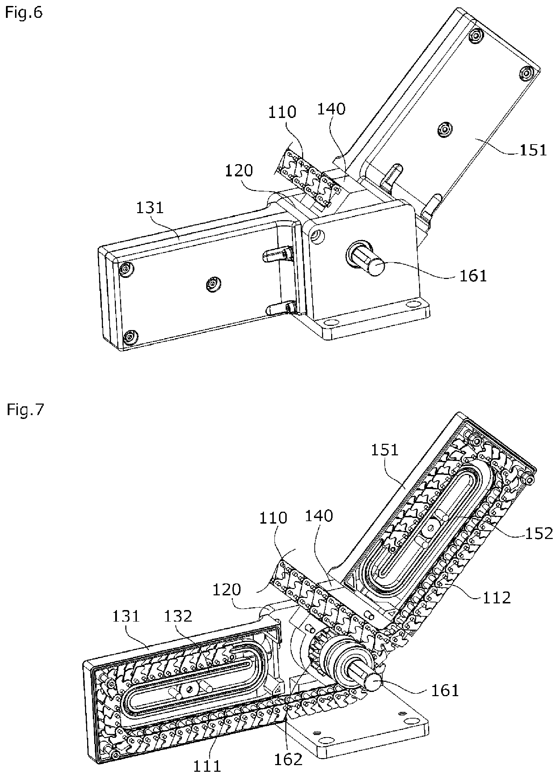

As illustrated on the right side of Fig. 11, when the driven member D swings greatly upward (the state illustrated in Figs. 6 to 10), only the swing guide unit 140 and the second chain accommodation unit 151 swing about the rotational axis of the sprocket 162, thereby greatly tilting the pressing-up direction.

When the driven member D swings downward, the second chain 112 is drawn in by the sprocket 162 in a manner opposite to that described above, whereby the first and second chains 111 and 112 are guided along the swing guide groove 141, separated from the previously integrated rigid state, and accommodated in the first chain accommodation unit 131 and the second chain accommodation unit 151, respectively.

In the present embodiment, the fixed guide groove 121 and the swing guide groove 141 partially overlap each other and are formed with thicknesses respectively engaging with the protruding ends of the pins of the first chain 111 and the link plate, thereby preventing the occurrence of non-guided sections when the swing guide unit 140 swings.

Although the swinging of the driven member D has been described above as an example, the present invention is not limited to this application. A separate drive mechanism may be provided to actively swing the swing guide unit, thereby changing the feeding-out direction.

Note that the lengths of the accommodated portions of the first chain 111 and the second chain 112 illustrated in Figs. 1 to 3 and Figs. 6 to 8 are drawn as being the same for the convenience of illustration, but they are, of course, different between the accommodated state and the protruded state. Furthermore, the overall lengths of the first and second chains 111 and 112 and the sizes of the accommodation units may be appropriately changed in accordance with the stroke of reciprocating movement.

In the above-described embodiment, the swing guide unit 140 is configured such that the feeding-out direction of the rigid portion tilts toward the first chain accommodation unit 131 of the first chain 111, but it may alternatively be configured such that the feeding-out direction tilts toward the second chain accommodation unit 151 of the second chain 112 depending on the application.

Furthermore, in the above-described embodiment, the second chain accommodation unit 151 is configured to swing integrally with the swing guide unit 140, but a flexible guide member may be provided between the swing guide unit and the second chain accommodation unit, thereby swinging only the swing guide unit.

In the above-described embodiment, the chain member 110 is composed of a pair of chains (the first chain 111 and the second chain 112) that engage with each other to be integrated. However, a chain member such as a push-pull chain or a no-back-bend chain, which can be brought into a rigid state using a single chain, may be employed. In this case, the swing guide unit may be configured such that the feeding-out direction of the chain member tilts toward a side opposite to the first chain accommodation unit 131, thereby omitting the second chain accommodation unit.

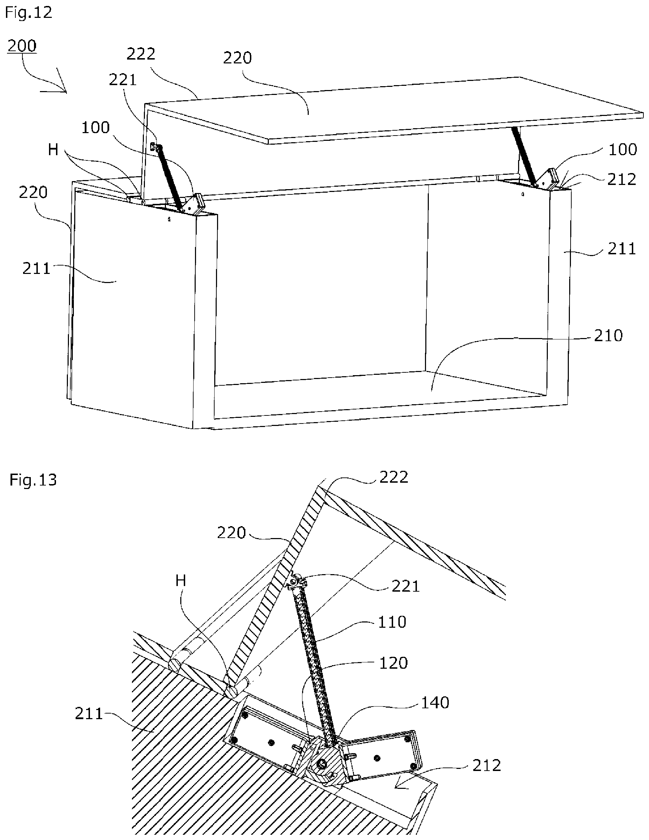

As illustrated in Figs. 12 and 13, a door opening and closing mechanism according to an embodiment of the present invention is provided in a box body 200 that includes a body unit 210 and door members 220.

The door members 220 are rotatably connected to one surface of the body unit 210 via hinge shafts H and are configured to be opened and closed by the chain drive devices 100 described above.

In the present embodiment, the box body 200 has a rectangular parallelepiped shape and includes two hinge shafts H and two door members 220 on an upper surface side thereof. Each door member 220 has a bent portion 222 formed to cover the upper surface and one lateral surface of the body unit 210 and is configured to form a large opening that is continuous from the upper side to the lateral side.

The chain drive devices 100 are arranged at both ends of the door member 220 in an axial direction of the corresponding hinge shaft H and are arranged so as to be accommodatable in device accommodation portions 212 provided at upper ends of adjacent lateral wall portions 211 of the body unit 210.

With this construction, a large opening can be obtained over the entire width direction of the door members 220 without being obstructed by the chain drive devices 100. When the door members 220 are closed, the chain drive devices 100 do not protrude toward the inside or outside of the body unit 210, thereby providing a compact door opening and closing mechanism without protruding portions.

The distal ends of the chain members 110 of the chain drive devices 100 are connected to the door members 220, and the fixed guide units 120 of the chain drive devices 100 are fixed in the device accommodation portions 212 of the body unit 210.

Note that, instead of providing the device accommodation portions 212 in the lateral wall portions 211, the chain drive devices 100 may be provided on an inner side or an outer side of the lateral wall portions 211 of the body unit 210. Alternatively, the fixed guide units 120 of the chain drive devices 100 may be fixed to the door members 220, with the distal ends of the chain members 110 connected to the body unit 210.

Furthermore, in the present embodiment, the door members 220 are arranged to rotate about the hinge shafts H provided on an upper surface of the rectangular-parallelepiped box body 200. However, the door members may alternatively be provided on lateral surfaces of the box body, and the axial direction of the hinge shafts may be oriented in any direction including a horizontal, vertical, or oblique direction.

Furthermore, the shape of the box body is not limited to a rectangular parallelepiped, and the box body may have any shape.

In addition, the door opening and closing mechanism of the present invention may be applied to any object, such as structures, and objects to be opened and closed are not limited to actual "doors" but may include any object such as "windows" or "shutters."

### Reference Signs List

- 100: Chain drive device
- 110: Chain member
- 111: First chain
- 112: Second chain
- 120: Fixed guide unit
- 121: Fixed guide groove
- 131: First chain accommodation unit
- 132: First accommodation guide groove
- 140: Swing guide unit
- 141: Swing guide groove
- 151: Second chain accommodation unit
- 152: Second accommodation guide groove
- 161: Drive shaft
- 162: Sprocket
- 200: Accommodation box body
- 210: Body unit
- 211: Lateral wall portion
- 212: Device accommodation portion
- 220: Door member
- 221: Chain connection unit
- 222: Bent portion
- D: Driven member
- H: Hinge shaft

## Claims

1. A chain drive device comprising: a chain member driven to move back and forth; a chain accommodation unit that accommodates the chain member; a chain guide mechanism that guides the chain member from the chain accommodation unit into a rigid state; and a drive mechanism that drives the chain member back and forth, wherein
the chain guide mechanism includes a fixed guide unit continuous with the chain accommodation unit, and a swing guide unit arranged to be swingable relative to the fixed guide unit.

2. The chain drive device according to claim 1, wherein
the drive mechanism includes a sprocket that engages with the chain member, and
a swing center of the swing guide unit is aligned with a rotation center of the sprocket.

3. The chain drive device according to claim 1, wherein
the chain member includes a pair of chains that engage with each other to be integrated, and
the chain accommodation unit includes a first chain accommodation unit that accommodates one of the pair of chains, and a second chain accommodation unit that accommodates the other of the pair of chains, the first chain accommodation unit being arranged to be continuous with the fixed guide unit, the second chain accommodation unit being arranged to be continuous with the swing guide unit.

4. A door opening and closing mechanism for opening and closing a door member rotatably connected to a body unit via a hinge shaft by a chain drive device, wherein
the chain drive device includes a chain member driven to move back and forth, a chain accommodation unit that accommodates the chain member, a chain guide mechanism that guides the chain member from the chain accommodation unit into a rigid state, and a drive mechanism that drives the chain member back and forth,
the chain guide mechanism includes a fixed guide unit continuous with the chain accommodation unit, and a swing guide unit arranged to be swingable relative to the fixed guide unit, and
a distal end of the chain member and the fixed guide unit are connected to the door member and the body unit, respectively.
